(19) Europäisches Patentamt
European Patent Office
Office européen des brevets

(11) EP 0 820 078 A1

(12) **EUROPÄISCHE PATENTANMELDUNG**

(43) Veröffentlichungstag:
21.01.1998 Patentblatt 1998/04

(51) Int. Cl.$^6$: **H01G 9/155**

(21) Anmeldenummer: 97110888.1

(22) Anmeldetag: 02.07.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 07.02.1997 DE 19704584
19.07.1996 DE 19629154

(71) Anmelder: DORNIER GmbH
D-88039 Friedrichshafen (DE)

(72) Erfinder:
• Schmid, Ottmar, Dipl.-Ing.
88677 Markdorf (DE)
• Kurzweil, Peter, Dr.
88090 Immenstaad (DE)
• Heidrich, Hans-Jörg, Dr.
89075 Ulm (DE)

(74) Vertreter: Meel, Thomas et al
Dornier GmbH
L H G
88039 Friedrichshafen (DE)

(54) **Doppelschichtkondensator aus mehreren Doppelschichtkondensatoreinzelzellen**

(57) Die Erfindung betrifft einen Doppelschichtkondensator aus mindestens zwei hintereinandergeschalteten Doppelschichtkondensatoreinzelzellen, wobei

- abwechselnd bipolare Elektroden (4) und Elektrolytschichten (5) angeordnet sind, und
- eine bipolare Elektrode (4) eine elektrisch leitfähigen Träger (1) und eine beidseitig aufgebrachte Aktivschicht (2) mit geringem Widerstand und hoher aktiver Oberfläche umfaßt, und
- der Träger (1) als elektrisch leitende Barriere zwischen den anliegenden ionenleitenden Elektrolytschichten wirkt, und die
- Elektroden (4) und Elektrolytschichten (5) einen festen Verbund bilden, wobei ein elektrisch leitfähiger Binder in der Aktivschicht integriert ist oder eine separate Verbindungsschicht (3) zur Haftvermittlung von Aktivschicht und Elektrolytschicht vorhanden ist.

Fig. 2

Verbund bipolarer Elektroden 4 zu einem Stapel

EP 0 820 078 A1

**Beschreibung**

Die Erfindung betrifft einen elektrochemischen Doppelschichtkondensator aus mehreren Doppelschichtkondensatoreinzelzellen. Eine Einzelzelle umfaßt dabei zwei in Serie geschaltete Elektroden sowie einen zwischen den Elektroden angeordneten Elektrolyten, so daß zwei kapazitive Grenzflächen Elektrode/Elektrolyt entstehen.

**Stand der Technik**

Doppelschichtkondenstoren sind z.B. aus der **DE 43 13 474** bekannt. In dieser Literaturstelle sind auch Prinzip und Funktionsweise der Doppelschichtkondensatoren, im folgenden auch mit DSK abgekürzt, umfassend beschrieben. Gegenstand der vorliegenden Erfindung sind die designspezifischen Aspekte eines Doppelschichtkondensators.

Doppelschichtkapazität und reale Oberfläche der Grenzfläche Elektrode/Elektrolyt sind proportional. Deshalb werden für DSK vorzugsweise Elektroden eingesetzt, die eine hohe BET-Oberfläche aufweisen. Zur Bewertung der realen Elektrodenoberfläche dient der Rauhigkeitsfaktor r, der das Verhältnis der realen Oberfläche zur geometrischen beschreibt.

Zur Designauslegung des DSK sind geometrische Oberfläche und flächenspezifische Kapazität der Einzelzelle von Bedeutung. Dabei wird definiert: flächenspezifische Kapazität = Zellenkapazität/Zellquerschnitt.

Um kompakte und leistungsfähige Doppelschichtkondensatoren zu realisieren, spielt ferner die Anordnung und Verbindung der Doppelschichtkondensatoreinzelzellen eine wesentliche Rolle. Für die Massen- und Volumenoptimierung sind die in der Tabelle 1 aufgeführten Beziehungen dienlich. Grundsätzlich muß der Innenwiderstand des DSK wesentlich kleiner dimensioniert werden als der Verbraucherwiderstand, um eine hohe Leistung an den Verbraucher abgeben zu können.

Analog wird die massen- oder volumenbezogene Leistung (kurz: spezifische Leistung oder Leistungsdichte) aus der Leistung $P = U^2/R$ erhalten (Gleichung 10,11, Tabelle 1).

Die maximale Ladespannung einer Einzelzelle eines Kondensators wird bestimmt durch die Zersetzungsspannung des Elektrolyten. Unterhalb dieser Zersetzungsspannung muß der Doppelschichtkondensator betrieben werden, um irreverisble Beschädigung zu vermeiden. Die erlaubte maximale Betriebsspannung des DSK ergibt sich durch die Zahl elektrisch hintereinander geschalteter Einzelzellen und der Summe der Einzelzellspannungen (Gleichung 3, Tabelle 1).

Auf Basis der Auslegungsgleichungen (Tabelle 1) können zusammenfassend folgende Zielvorstellungen bzw. Anforderungen für die Designparameter abgeleitet werden:

| Bauteile/ Baugruppe | Hauptanforderung | Zweck der Anforderungen |
|---|---|---|
| Elektrolytschicht | dünn, hohe Ionenleitfähigkeit, porös, saugfähig | > geringer innenwiderstand des Kondensators, kompaktes Design |
| Elektrodenträger | - hohe elektrische Leitfähigkeit | > geringer Innenwiderstand des |
| | gute Hafteigenschaften für die Aktivschicht | > große reale Oberfläche Elektrode/ Elektrolyt |
| | | > gut haftende Aktivschicht auf dem Elektrodenträger |
| Aktivschicht | - hohe BET-Oberfläche, hohe elektrochemische Aktivität | > hohe flächenspezifische Kapazität > hohe Kurzschlußfestigkeit (geringer Reststrom) |
| | - gute Haftung auf dem Elektrodenträger | > hohe Lebensdauer |
| | - hohe Zyklenstabilität, hohe Leitfähigkeit, hohe Kapazität | |
| elektrische Kontaktierung | - niedrige Übergangswiderstände zwischen den einzelnen Schichten | > geringer Innenwiderstand des Kondensators |
| | - keine Stromgradienen | |
| Dichtungen | - niedriger Raum- und Massenbedarf | > hohe spezifische Leistungsdaten |
| | - einfache und verläßliche Gestaltung | > hohe Lebensdauer |
| | - billig und verfügbar | > auslaufsicherer Elektolyt |
| Kondensatorgehäuse | - niedriger Raum- und Massenbedarf | > Beitrag zur Erreichung hoher spezifischer Leistungsdaten |
| | - evtl. hermetisch dicht | |
| Stromanschlüsse | - homogene Stromzu- und -abfuhr | > Vermeidung von "hot spots" und Erzielung hoher flächenspezifischer Kondensatorkapazitätsrate |
| | - niedriger Raum- und Massenbedarf | > Beitrag zur Erreichung hoher Leistungsdaten |
| | - einfache und verläßliche Gestaltung | > hohe Lebensdauer |
| Montage | - einfache und reproduzierbare Montage | > Montageaufwand und niedrige Ausschußraten |
| Betriebssicherheit | - einfache Gestaltung der Bauteile; gefahrenfreier Betrieb | > Erfüllung hoher sicherheitstechnischer Standards, einfache Bedienung |

Die ohmschen Widerstände des DSK bewirken bei elektrischer Stromzufuhr (Laden) und Stromabfuhr (Entladen) einen Wärmestrom, der durch angepaßte Designmaßnahmen entsprechend abgeführt werden muß, um eine Überhitzung und damit Zerstörung des DSK zu vermeiden. Die ohmschen Verluste des DSK, der aus hintereinander geschalteten Einzelzellen besteht, setzen sich zusammen aus ohmschen Verlusten der elektrischen Zu- und Ableitungen am Kondensator und den Zellwiderständen. Für identische Zellen im Kondensator gilt Gleichung 6 von Tabelle 1.

Da gut leitfähige Elektrodenmaterialien eingesetzt werden, wird der Zellwiderstand im wesentlichen durch den Widerstand der Elektrolytschicht und Kontaktwiderstände bestimmt.

Aufgrund des Innenwiderstandes wird die ohmsche Verlustleistung $P = I(t)^2 R$ erzeugt, die wirkungsvoll abgeführt werden muß (Gleichung 13, Tabelle 1).

Je nach Anwendungsfall muß eine aktive Kühlung (Wasserkühlung, Luftkühlung) oder passive Kühlung (freie Konvektion) über eine größere Austauschfläche vorgesehen werden.

Die Lebensdauer eines DSK ebenso wie die bekannter Elektrolytkondensatoren hängt signifikant von der Betriebstemperatur ab. Mit zunehmender Betriebstemperatur steigt der Dampfdruck des Elektrolyten und somit die Diffusion des Dampfes durch Dichtungsflächen zur Umgebung. Dies führt zur irreversiblen Aufkonzentrierung oder Zersetzung des Elektrolyten und letztlich zur Unbrauchbarkeit des DSK. Die größten Dampfleckströme erfolgen aufgrund der vergleichsweise zu den anderen DSK-Bauteilen deutlich höheren Dampfpermeationsraten über die Dichtungen, die das Zellinnere von der Umgebung hermetisch abtrennen. Aus den genannten Gründen kommt dem Dichtungskonzept des DSK eine zentrale Bedeutung zu.

Letztlich ist nur eine Doppelschichtkondensatortechnologie sinnvoll, die die geforderten Leistungsdaten kostengünstigste, verläßlich und sicher mit kompaktem Design erfüllt.

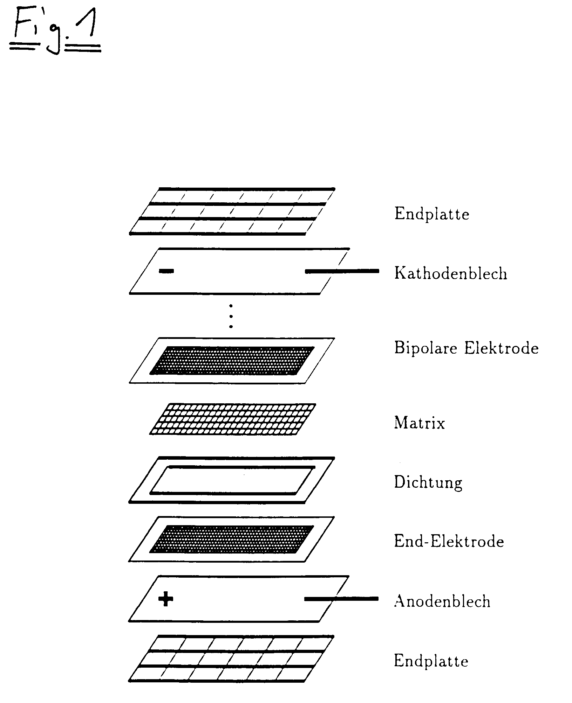

Bekannte Doppelschichtkondensatoren, z.B. in Journal of Power Sources <u>60</u> (1996) 219 - 224 weisen folgende Nachteile auf (Fig. 1):

*1. Problem der Abdichtung des Elektrolytraumes und der Hintereinanderschaltung von Einzelzellen*

Wird jede Einzelzelle abgedichtet, z.B. durch eine Flachdichtung, erfordert die Anordnung hohen Fertigungs- und Montageaufwand. In einem Stapel erwächst ein sicherheitstechnisches Risiko, wenn beispielsweise aufgrund inhomogener Kondensatorspannungsaufteilung an einer oder an mehreren Zellen die Zersetzungsspannung des Elektrolyten überschritten wird und damit Gasentwicklung stattfindet. Der erzeugte Überdruck kann zum Bersten der Dichtung des Gehäuses und zur Zerstörung der Zellen führen.

Durch die Fehlfunktion nur einer Einzelzelle wird der ganz DSK unbrauchbar. Nach aufwendiger Identifikation der defekten Zelle und Demontage des Kondensators in seine Einzelzellen und Einzelzellbauteile kann die Funktion des Kondensators wieder hergestellt werden.

Die Lebensdauer wird in Abhängigkeit der Betriebsverhältnisse (Temperatur, Betriebszyklus, etc.) weiterhin durch die Austrocknungsgeschwindigkeit der Elektrolytschicht limitiert. Ursache dafür ist die Wasserdampfdiffusion durch die Dichtungen und die Grenzflächen zwischen Dichtungen und dem Dichtkörper. Bekannte Dichtungskonzepte, die eine Abdichtung für jede Einzelzelle vorsehen, erleiden Leckverluste, die nicht reversibel gestaltet werden können, ohne den DSK in seine Einzelzellen zu demontieren.

Die Lebensdauer wird weiterhin begrenzt durch die Aufschichtung von Dichtungen zwischen den Elektroden. Entlang des verpreßten Stapels ergibt sich eine Druckverteilung, die zu einer temperaturabhängigen kontinuierlichen plastischen Verformung der Dichtungen führt. Gegen diese Vorgänge muß durch aufwendige Gestaltung der Stapelpreßeinrichtung (z.B. mit Tellerfedern) Rechnung getragen werden. In einem Stapel mit mehr als ca. 50 Einzelzellen erschwert die Vielzahl der in den Zellen hintereinander angeordneten verformbaren Dichtungen die erforderliche konstante Verpressung des Stapels (auch mit Tellerfedern).

*2. Problem der elektrischen Kontaktierung von Zelle zu Zelle und von Zellblöcken*

Die bislang bekannten Doppelschichtkondensatoren wurden durch loses Aufeinanderschichten der Einzelzellen und Einzelzellelemente (bipolare Elektroden, Elektrolyt, Dichtungen) aufgebaut (Fig. 1). Die Folge sind hohe Übergangswiderstände zwischen den geschichteten Bauteilen, die sich nachteilig auf den Innenwiderstand des Kondensators auswirken.

*3. Problem der Montage und Reparatur*

Die Vielzahl der Kondensatorelemente bedingt einen hohen Montageaufwand und hohe Ausschußraten. Die Reparatur eines Kondensators, der aus einer Vielzahl von Einzelzellen besteht, ist kaum möglich.

Bei bekannten Doppelschichtkondensatoren, wie sie von NEC, PANASONIC, ASHAHI, PINNACLE, MAXWELL, GINER, EVANS ALCATEL, DANIONICS u.a. beschrieben wurden, sind die genannten Probleme nicht gelöst worden - oder sie wurden dadurch teilweise umgangen, daß statt einer bipolaren Zellanordnung aus einer größeren Anzahl von Einzelzellen und hoher Gesamtspannung Einzelzellen von nur wenigen Volt Nennspannung realisiert wurden.

Der Erfindung liegt die Aufgabe zugrunde, einen betriebssicheren und wartungsfähigen Doppelschichtkondensator anzugeben, ohne die beschriebenen Nachteile bei gleichzeitig hoher Leistungsfähigkeit (Energiedichte und Leistungsdichte) über eine lange Lebensdauer zu realisieren. Bei großen DSK mit merklichen Gestehungskosten soll eine Reparatur möglich sein.

Diese Aufgabe wird durch einen Doppelschichtkondensator nach Patentanspruch 1 gelöst. Vorteilhafte Ausbildungen der Erfindung sind Gegenstand weiterer Ansprüche.

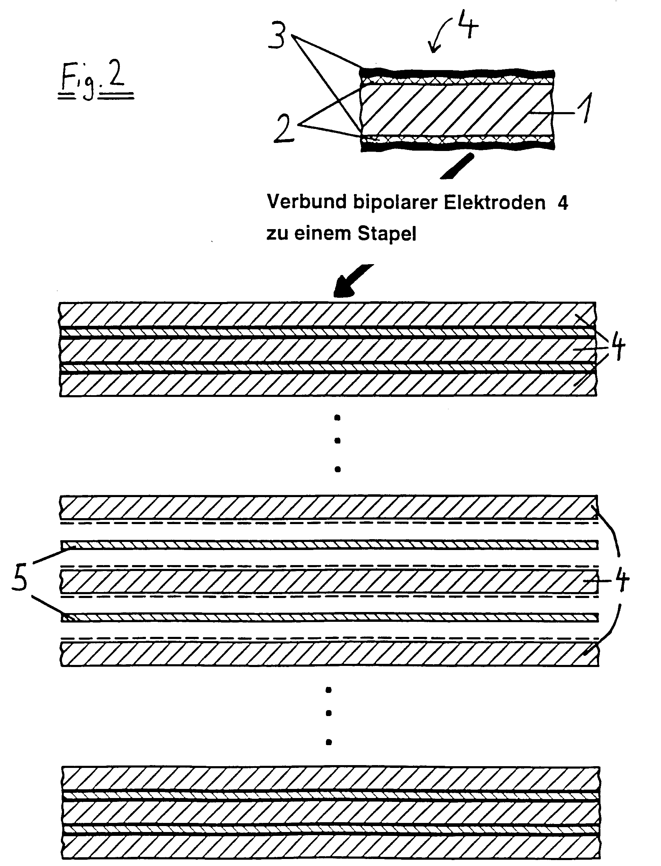

Der erfindungsgemäße Doppelschichtkondensator ist folgendermaßen aufgebaut (siehe z.B. Prinzipskizze nach Fig. 2):

Er umfaßt mindestens 2 Doppelschichtkondensatoreinzelzellen. Es sind abwechselnd bipolare Elektroden **4** und Elektrolytschichten **5** angeordnet. Zwischen Elektroden und Elektrolytschichten werden keine weiteren Schichten, wie z.B. Dichtungsschichten für den Elektrolyten oder separate Ionen-Sperrschichten, die auch zur Zelltrennung dienen, benötigt.

Dabei stehen die Einzelzellen und Einzelzellelemente (Elektroden, Elektrolyt) im festen mechanischen Verbund miteinander. Dazu ist ein elektrisch leitfähiger Binder in der Aktivschicht der Elektrode integriert oder es ist eine separate Verbindungsschicht **3** zur Haftvermittlung von Aktivschicht und Elektrolytschicht vorhanden.

Die Elektrode entsteht durch Aufbringung der Aktivschicht **2** mit hoher Oberfläche, geringem Widerstand und hoher Kapazität fest haftend auf eine dünne, elektisch gut leitfähige, mechanisch stabile, makro-, meso- und/oder mikroporöse, thermisch und chemisch stabile Trägerschicht **1**, die als elektrisch leitfähige Barriere zwischen den anliegenden ionenleitenden Schichten dient.

Vorteilhatte Ausführungen der Erfindung umfassen folgende zusätzliche Merkmale:

- Aufschichtung der Elektroden und Elektrolytschichten zu einem Stapel mit einer größeren Anzahl (>>2) von Einzelzellen. Alternativ kann ein Stapel, der nur wenige Einzelzellen (z.B. zwei Einzelzellen) umfaßt, sprialförmig oder schleifenförmig oder mäanderförmig angeordnet sein.

- Einbettung der Aktiveinheit in ein hermetisch dichtes oder weitgehend gasundurchlässiges Gehäuse.

- Installation einer elektrischen Stromab- und -zufuhr mit geringen ohmschen Verlusten.

- Gestaltung einer ausreichenden Wärmeabfuhr, um eine Zerstörung des Bauteils durch Überhitzung zu vermeiden.

- Verschaltung mehrerer DSK mit dem Ziel, hohe Nennspannungen und Kapazität der Gesamtschaltung zu erreichen.

Die Erfindung wird anhand von Fig. näher erläutert. Es zeigen:

Fig. 1    Aufbau eines Doppelschichtkondensators gemäß dem Stand der Technik
Fig. 2    einen erfindungsgemäßen Doppelschichtkondensator als Stapel aus bipolaren Elektroden und Elektrolytschichten, teilweise explodiert dargestellt
Fig. 3    eine Skizze zur Herstellung eines erfindungsgemäßen Doppelschichtkondensators
Fig. 4    einen erfindungsgemäßen Doppelschichtkondensator im Stapeldesign, teilweise explodiert dargestellt
Fig. 5    einen erfindungsgemäßen Doppelschichtkondensator im Stapeldesign mit Bördelgehäuse
Fig. 6    einen erfindungsgemäßen Doppelschichtkondensator im Stapeldesign mit einem Gehäuse in der Form einer Büchse
Fig. 7    einen erfindungsgemäßen Doppelschichtkondensator im Stapeldesign mit einem Gehäuse in der Form eines Rohres sowie einem Druckpuffer
Fig. 8    einen erfindungsgemäßen Doppelschichtkondensator im Stapeldesign mit Vergußmasse
Fig. 9    einen erfindungsgemäßen Doppelschichtkondensator im Schleifendesign.
Fig. 10   eine Darstellung der Leistungsdaten mehrerer Ausführungsbeispiele des erfindungsgemäßen Doppelschichtkondensators.

## 1. Elektrolytschicht 5

Die Erfindung betrifft insbesondere DSK mit festen, pastösen oder gelartigen Elektrolyten, die eine hohe Ionenleitfähigkeit aufweisen.

Die Elektrolytschicht muß so ausgebildet werden, daß kein elektronenleitender Kontakt zwischen den Elektroden entsteht. Ausführungsbeispiele sind wie folgt:

- Festelektrolyte wie Ionen- oder Protonenaustauschmembranen (z.B. Nafion® oder GORE Select®). Ebenso eignen sich gelartige protonleitende Massen, die auf den Träger aufgetragen werden.

- sogenannte festgelegte Elektrolyte, die eine pastöse bzw. gelartige Struktur aufweisen und beispielsweise durch Binder mit flüssigen Elektrolyten zu einer streichfähigen Paste verarbeitet werden. Zur Vermeidung eines Kurzschlusses über die Elektrolytschicht bei sehr geringem Abstand zwischen den Elektroden ist es auch vorteilhaft, gasdurchlässige Abstandshalter (wie z.B. Netze oder Gewebe) in die Elektrolytschicht zu integrieren.

## 2. Trägerschicht 1

Die Trägerschicht besitzt die Aufgabe, für die Aktivschicht, die beidseitig aufgebracht wird, eine möglichst hohe Querschnittsfläche bereitzustellen und eine ionenleitende Barriere zwischen den anliegenden Elektrolytschichten zu realisieren sowie letztlich mechanische, thermische, chemische und elektrochemische Stabilität zu gewährleisten. Hierfür sind folgende Materialien geeignet:

- Grundsätzlich sind poröse oder dichte Schichten bzw. Kombinationen geeignet. Bei der Verwendung von porösen Schichten muß gewährleistet sein, daß weder Ionenleitung über den Träger erfolgt noch elektrische Verbindung der Aktivschichten auftritt. Diese Probleme werden gelöst durch Hydrophobisieren der porösen Träger vor Aufbringen der Aktivschicht. Mögliche Trägerschichten sind dichte metallische Schichten (Metallfolien oder poröse metallische Schichten wie Netze, Gewebe, Schäume, Vliese, Papiere etc.) sowie nichtmetallische dichte Schichten (wie leitfähige Kunststoffolien oder Graphitfolien oder poröse Schichten wie z.B. Graphit-, Kohlepapiere etc.).

## 3. Aktivschicht 2

Die Aktivschicht wird auf die Trägerschicht und/oder auf die Elektrolytschicht beidseitig aufgebracht. Die Aktivschicht besteht aus einem elektrisch leitfähigen elektroaktiven Material wie z.B. hydratisierten, nichtt vollständig oxidierten Metalloxiden von Ruthenium, Iridium, Tantal, Palladium, Platin, Titan und der Mischungen. Weitere vorteilhafte Ausbildungen sind Mischungen aus Metalloxide(n) und einem Füllstoff wie z.B. Ruß, Graphit, die eine hohe Oberfläche erzeugen und damit auch zur Reduzierung der Metalloxidbelegung beiträgt. Die Aktivschicht wird durch thermische Behandlung haftend auf Träger- oder Elektrolytschicht aufgebracht oder es wird ein Haftvermittler beigemengt. Als Haftvermittler werden Polymere, anorganische oder organische Binder verwendet. Unterhalb von ca. 200°C haben sich Nafion®-Lösungen als vorteilhaft erwiesen. Für Aktivschichten, die bei höheren Temperaturen (bis 500°C) aufgebracht werden, werden PTFE-Suspensionen eingesetzt. Weitere vorteilhafte Haftvermittler sind "Dicköl" und metallisch-organische Verbindungen. Dicköl ist ein Zwischenprodukt der Lackherstellung.

## 4. Verbindungsschicht 3

Treten zwischen Aktiv- und Trägerschicht erhebliche Haftungsprobleme auf, kann eine Verbindungsschicht aufgebracht werden. Sie ist elektrisch leitfähig, kann unterbrochen oder durchgehend ausgeführt werden und wirkt sich vorteilhaft auf die Haftfähigkeit zwischen Elektroden- und Elektrolytschicht aus. Mögliche Verbindungsschichten sind u.a. leitfähige Metall-Harzmischungen und Lacke sowie auch Nafion®-Lösungskonfigurationen

Eine geeignete kohlenstoffhaltige Haftschicht entsteht auch bei der thermischen Zersetzung organischer Verbindungen, wie Zucker, Fette oder Produkte landwirtschaftlicher Herkunft (Milch).

Dabei wird eine pulverförmige Vorstufe der Aktivschicht, z.B. Metalloxidpulver, mit dem organischen Produkt vermischt, auf den Träger aufgebracht, gestrichen, getaucht, gedruckt und unter Wärmeeinwirkung thermisch zersetzt.

## 5. Bifunktionale Verbindungsschicht

Die bifunktionale Verbindungsschicht garantiert die Haftung der Aktivschicht auf dem Träger und gleichzeitig auf der Elektrolytschicht.

Sie ist ursächlich für den kompakten mechanischen und gut elektrisch leitfähigen, untrennbaren Verbund der erfindungsgemäßen Einheit.

## 6. Gesamtaufbau des Doppelschichtkondensators

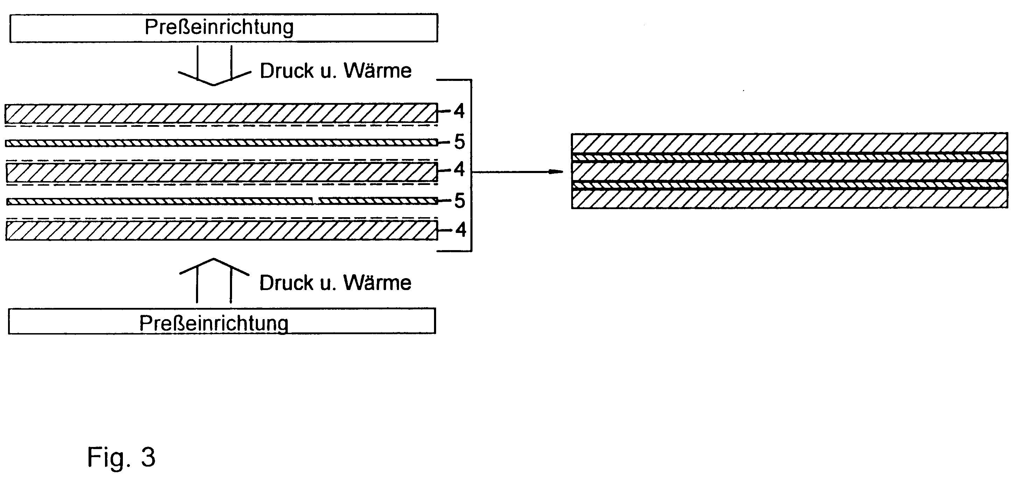

Der Doppelschichtkondensator umfaßt mindestens zwei Doppelschichtkondensatoreinzelzellen und wird in vorteilhaften Ausführungen als gewickeltes Band oder Stapel angeordnet. Eine Skizze zur Herstellung zeigt Fig. 3: Aufschichtung der Kondensatorelemente-/-komponenten, wobei bipolare Elektrodenschichten **4** und Elektrolytschichten **5** alternierend angeordnet werden. Oberste und unterste Schicht ist eine einseitig zur Elektrolytschicht ausgebildete Elektrode. Der Verbund zwischen Elektroden- und Elektrolytschichten erfolgt aufgrund folgender Mechanismen:

Fall a):          - Durch die adhäsive Wirkung der Verbindungsschicht **3** wird ein fester Verbund jeweils zwischen Elektrode **4** und Elektrolytschicht **5** realisiert. Dabei dienen Preßeinrichtungen im wesentlichen nur zur homogenen Aufschichtung der Schichten.

Fall b):          - Mittels der adhäsiven Wirkung der Verbindungsschicht in Verbindung mit einer Pressung und/oder Temperierung der zu verbinden Bauteile (z.B. durch eine Heißpresse oder Heißwalze) wird eine feste Verbindung erzielt.

Fall c):          - Unter Verzicht auf die Verbindungsschicht kann der Verbund durch den Binder in der Aktivschicht erreicht werden, der die Aufgabe besitzt, eine feste Haftung zur Trägerschicht zu gewährlei sten.

Fall d):          - Analog zu Fall c), jedoch durch Einprägung von Energie mittels Pressung und/oder Wärme, wird eine feste Verbindung zwischen Elektrode und Elektrolytschicht erzielt.

**Beispiele**

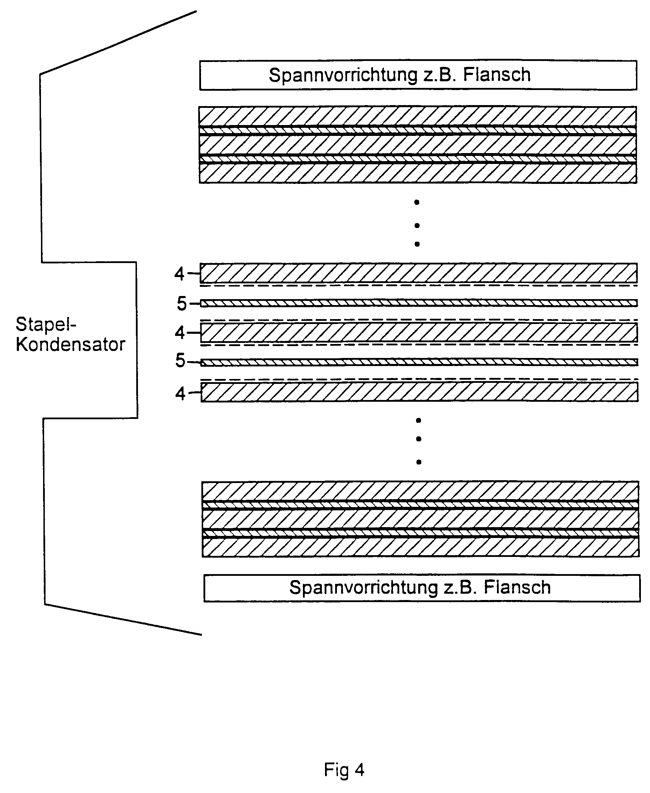

**Stapeldesign (Fig. 4)**

Vorteilhaft werden bei der Vorgabe einer hohen Kondensatorspannung und hoher Kapazität Stapelbauformen eingesetzt. Zur Realisierung eines Stapels werden die Kondensatorelemente (bipolare Elektrode **4**, Elektrolytschicht **5**) aufeinander geschichtet und innerhalb einer Spannvorrichtung, z.B. einem Flansch angeordnet. Erfindungsgemäß werden die einzelnen Kondensatorelemente miteinander verbunden.

**Ausführungsbeispiel A**

Trägerschicht:          ist poröses Kohlepapier oder dichtes Kohlepapier mit einem Kohlebinder
Aktivschicht:          ist ein Metalloxid nach DE 43 13 474. Es liegt als hydra tisiertes, nicht vollständig oxidiertes Pulver vor.
Verbindungsschicht:      entsteht durch Auftragung von Nafionlösung auf die Aktivschicht.
Elektrolytschicht:         ist eine Protonenaustauschmembran wie Nafion$^®$ oder GORE Select$^®$ sowie gelartige protonleitende Masse.

Durch alternierende Anordnung von Elektroden- und Elektrolytschichten, wobei die äußere Schicht aus einer einseitig zur Elektrolytschicht hin beschichteten Elektrode besteht, entsteht der Stapel.
Der Verbund wird vorteilhaft mittels einer Heißpresse durch Druck und Temperatur mit anschließender Kühlung des Verbundes hergestellt. Bei der Verwendung von Protonenaustauschmembranen ist es vorteilhaft, Heißpreßtemperaturen > 100°C und einen Preßdruck von > 1 bar zu verwenden.

**Ausführungsbeispiel B**

Trägerschicht:          ist eine dichte Kohlepapierfolie z.B. von ca. 40 $\mu$m Dicke
Aktivschicht:          ist ein Metalloxid nach DE 43 13 474. Es liegt als hy dratisiertes, nicht vollständig oxidiertes Pulver vor.
Verbindungsschicht:      ist eine Nafionlösung
Elektrolytschicht:         ist eine Protonenaustauschmembran (Dicke ca. 40 $\mu$m)

Die Aufschichtung und die Herstellung des Verbundes erfolgt analog Ausführungsbeispiel A.
Vorteilhaft ist die geringe Dicke der Verbundenheit und damit die hohe erzielbare Energie- und Leistungsdichte.

**Ausführungsbeispiel C**

Trägerschicht:          ist eine dichte Metallfolie z.V. von ca. 40 $\mu$m Dicke
Aktivschicht:          ist ein Metalloxid

Verbindungsschicht: ist eine feste Verbindung zwischen Gewebe und Trägerschicht, die durch einen Anlöseprozeß erreicht wird

Elektrolytschicht: ist eine streichfähige Paste, in ein Gewebe integriert (Dicke ca. 50 µm)

Die Paste besteht aus Schwefelsäure und Aluminiumoxid, das Gewebe aus Zirkondioxid-Polysulfon.

Nach Aufschichtung der Elektroden-Elektrolyt-Elemente wird der entstandene Stapel unter Temperatureinwirkung verpreßt.

Aufgrund des pastösen Elektrolyten ist die Abdichtung der Elektrolyträume verzichtbar.

**Ausführungsbeispiel D**

Träger ist eine Metallfolie oder eine Graphitfolie.

Darauf wird ein poröses Kohlenstoffgewebe aufgebracht, die Anordnung mit dem Metalloxid beschichtet, sodann mit Nafionlösung fixiert und der PEM-Festelektrolyt aufgebracht. Mehrere dieser Einheiten werden gestapelt und unter Druck- und Wärmeeinfluß zur Verbundenheit verdichtet.

**Gehäuse und elektrische Kontaktierung eines Stapelkondensators**

Der Stapel umfaßt mindestens zwei Kondensatoreinzelzellen und kann wie folgt elektrisch kontaktiert und verpreßt werden:

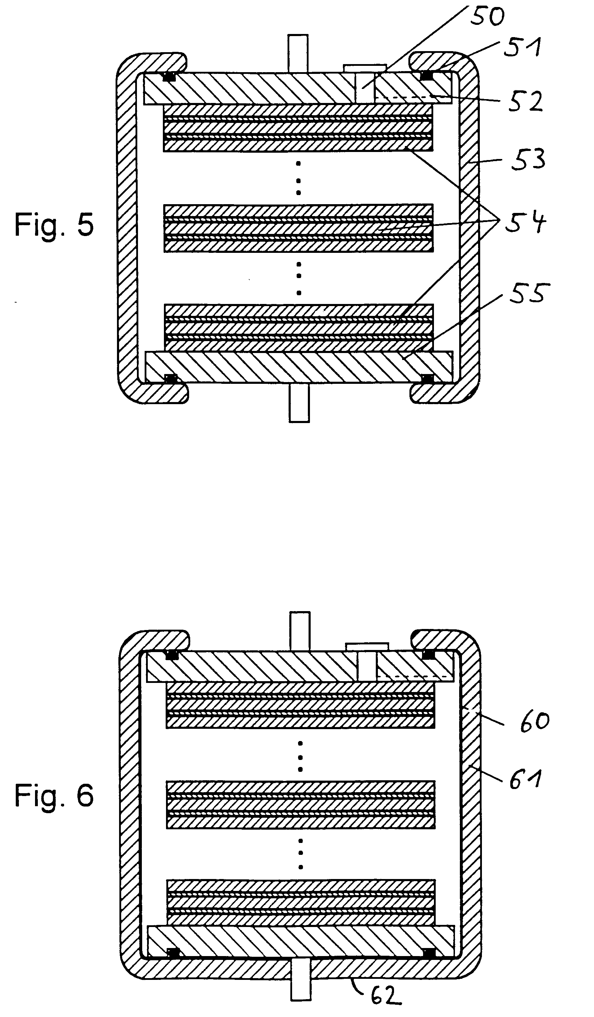

**a) Endplattendesign (Fig. 5)**
zwei Flanschplatten 52,55, die durch ein Bördelgehäuse 53 mechanisch auf den Stapel 54 gedrückt werden, realisieren den elektrischen Kontakt mit dem Stapel. Dabei dienen die Dichtungen 51 am Bördelgehäuse zur hermetischen Abdichtung. Eine Berstsicherung oder ein Überdruckventil 50, das an dem Flansch 52 angebracht wird, dient als Überdrucksicherung bei einer Fehlfunktion durch Gasbildung.

**b) Dosendesign**
Der Stapel wird in einer Büchse 61 mit Deckel 62 integriert (Fig. 6). Die Büchse kann aus Kunststoff oder aus Metall bestehen. Im letztgenannten Fall ist eine elektrisch isolierende Schichten 60 auf der inneren Wandung der Büchse vorhanden. Der Stapel ist wie beim obenbeschriebenen Endplattendesign zwischen zwei Flanschplatten angeordnet, wobei die eine Flanschplatte auf dem Deckel 62 der Büchse aufliegt, und die andere an die Büchse mittels Bördeln verbunden ist. Die elektrische Kontaktierung erfolgt über die Flanschplatten.

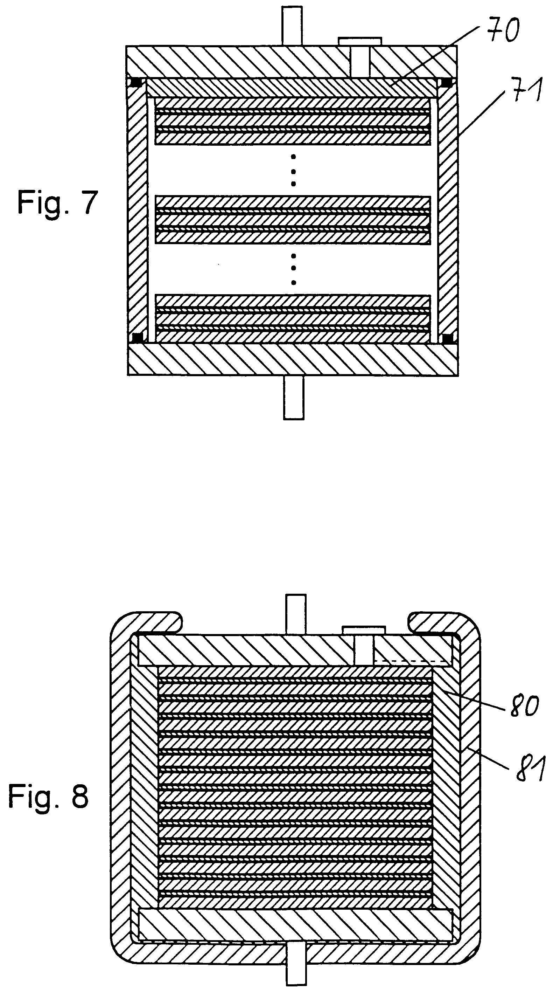

In einer weiteren Ausführung (Fig. 7) ist der Stapel in ein elektrisch isoliertes Metallrohr oder ein isolierend wirkendes Kunststoffrohr 71 eingelegt. Die Kontaktierung des Stapels erfolgt über die elektrisch leitenden Flanschplatten. Die Wärmeausdehnungen werden durch einen elektrisch leitfähigen mechanischen Puffer 70 ausgeglichen, so daß eine entsprechende Pressung und damit gute Kontaktierung vorliegt.

**c) Vergußdesign (Fig. 8)**
Der Stapel wird in eine Gußform (z.B. aus PTFE) mit Endflanschen eingelegt und mit einer Vergußmasse 80 (z.B. Epoxidharz/Elastomer Gemisch) vergossen. Hierbei kann die Vergußmasse 80 gleichzeitig Gehäusefunktionen übernehmen, wobei die elektrische Kontaktierung über Endflansche erfolgt. Die Eingießung des Stapels gelingt über Gußmassenzu- und -abführöffnungen. Insbesondere die Methode der Einbettung des Stapels durch Vergußmassen ist vorteilhaft für kleine DSK, die eine kostengünstige Reparatur nicht erlauben würden.

**Ausführungsbeispiel für das Gehäuse**

Das Gehäuse erfüllt Schutzfunktionen: Ein Kontamination des Elektrolyten und der Elektroden mit der Umgebungsatmosphäre muß verhindert werden, Wärme muß abgeführt werden, so daß geringe Temperaturdifferenzen zwischen dem Zellinneren und der Umgebung entstehen.

Folgende Ausführungen haben sich als vorteilhaft erwiesen:

- Mit einer Oberflächenerhöhung des Gehäuses (z.B. mittels einer Berippung) werden die Voraussetzungen für eine gute Wärmeabfuhr geschaffen. Dabei werden z.B. die Flansche aus gut leitfähigen Materialien (Aluminium, Graphit etc.) hergestellt.

- Bei Bedarf wird eine Gasüberdrucksicherung in das Gehäuse integriert.

- Die Gehäusebauteile werden oberflächenbeschichtet. Die Flanschhälften, die in direktem Kontakt zum Stapel stehen und zur elektrischen Kontaktierung dienen, werden mit elektrisch leitfähigen und korrosionsstabilen Schichten behandelt. Beispielsweise wird das Bördelgehäuse aus metallischem Material mit einer elektrisch isolierenden Schicht (z.B. Polyamid) bearbeitet.

## Wickel- oder wickelähnlicher DSK

Durch Heißwalzen hergestellte Kondensatorstapel (z.B. aus zwei Einzelzellen) in Bandform werden gewickelt und in ein Gehäuse mit elektrischer Kontaktierung integriert. Vorteilhafte Wickelbauarten sind Gegenstand folgender Ausführungen:

### a) Wickeldesign

Der Wickel wird durch spiralförmiges Aufrollen erzeugt und danach in ein Gehäuse integriert. Anschließend wird das Gehäuse hermetisch dicht verschlossen.

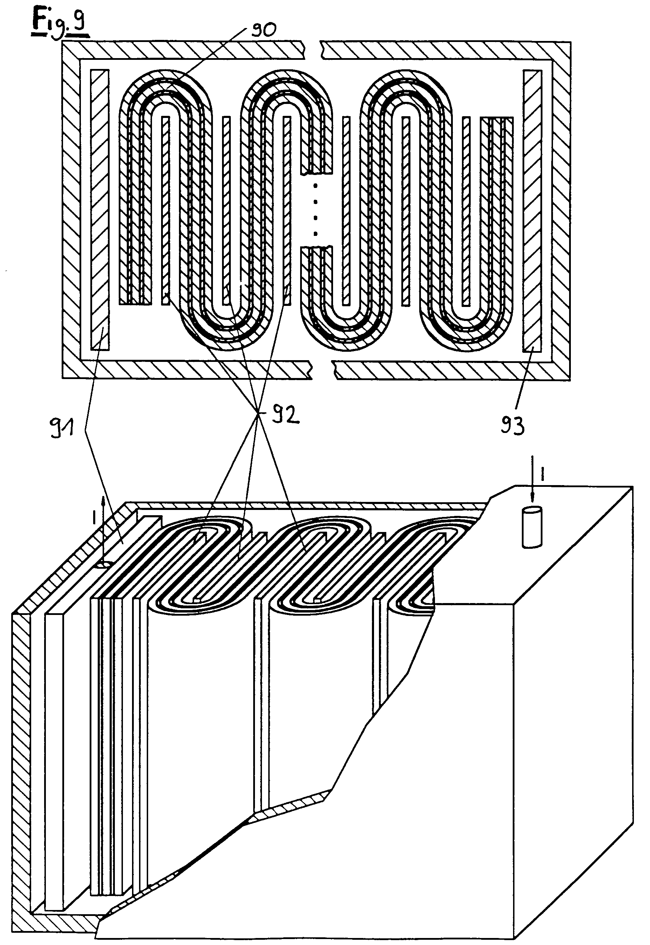

### b) Schleifendesign (Fig. 9)

Das Band 90 wird schleifen-, bogen- oder mäanderförmig gewickelt und zwischen zwei Platten 91,93 verpreßt. Zwischen den Schleifen wird eine isolierende Schicht 92 (z.B. Kunststoffplatte) angeordnet, die Kurzschlüsse zwischen den Schleifen verhindert und definierte Biegeradien der Schleifen garantiert. Außerdem wird in vorteilhaften Ausführungen die isolierende Schicht 92 strukturiert z.B. durch Kanäle, damit eine verbesserte Wärmeabfuhr auch über die Isolierschichten erfolgen kann.

## Leistungsdaten

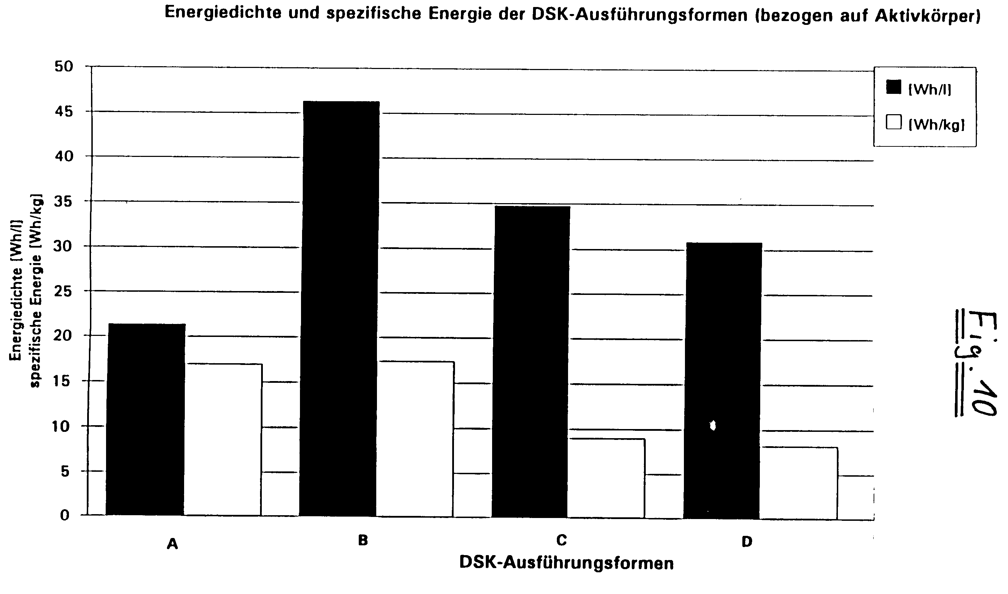

Mit den beschriebenen DSK werden hochleistungsfähige Energiespeicher, Stromquellen etc. hergestellt. Fig. 10 zeigt Leistungsdaten (Energiedichte und spezifische Energie), die mit den oben beschriebenen DSK-Ausführungsbeispielen A bis D erreicht werden. Dabei ist jedoch zu bemerken, daß in die Berechnung nur der Aktivkörper eingeht.

## Anordnung und Verschaltung von DSK

Zur kostengünstigen Realisierung der DSK ist die Einführung von Baureihen unumgänglich. Die Anpassung an die geforderte Leistungsgröße erfolgt dann durch Verschaltung von mehreren DSK. Hierbei werden DSK mit separatem Gehäuse und/oder DSK ohne separatem Gehäuse mit einem Gehäuse angeordnet und elektrisch verschaltet.

Grundsätzlich sollte die Anzahl der DSK mit separatem Gehäuse so gering wie möglich gehalten werden, da das Gehäuse einen wesentlichen Anteil an der Gesamtmasse und dem Gesamtvolumen besitzt.

| Gleichung | Benennung | Berechnungsformel |
|---|---|---|
| 1 | Rauhigkeitsfaktor | $r = \dfrac{A_{Rea.}}{A_{proj.}}$ |
| 2 | flächenspezifische Kapazität in [ F/ cm²] | $c = \dfrac{C_{Zelle}}{A_{proj.}}$ |
| 3 | Nennspannung $U_N$ [V] | $U_N = n_{Z.Kon.} \bullet U_Z$ |
| 4 | entnehmbare Energie $\Delta W_{ab}$ [Ws] | $\Delta W_{ab} = \displaystyle\int_{t_1(U_1)}^{t_2(U_2)} P_{ab}(t) * dt$ |
| 5 | Widerstand des Stromkreises [Ohm] | $R = R_{Kon.} + R_L$ |
| 6 | Widerstand Kondensator [Ohm] | $R_{Kon.} = n_{Z.Kon.} \bullet R_Z + R_{An.}$ |
| 7 | Momentanleistung [W] | $P(t) = \dfrac{U^2(t)}{R}$ |
| 8 | spez. Energie [Ws/kg] | $\Delta w_{m,ab} = \dfrac{\Delta W_{ab}}{m_{Kon.}}$ |
| 9 | Energiedichte [Ws/m³] | $\Delta w_{v,ab} = \dfrac{\Delta W_{ab}}{V_{Kon.}}$ |
| 10 | spez. Momentanleistung [W/kg] | $p_{m,ab}(t) = \dfrac{U^2(t)}{R \bullet m_{Kon.}}$ |
| 11 | Momentanleistungsdichte [Ws/m³] | $p_{v,ab}(t) = \dfrac{U^{2(t)}}{R \bullet V_{Kon.}}$ |
| 12 | Momentanentladestrom [A] | $I(t) = \dfrac{U(t)}{R}$ |
| 13 | ohmsche Verlustleistung [W] | $\dot{Q}_{ab} = I_{eff}^2 \bullet R_{Kon.}$ |
| 14 | Volumen Aktivkörper [m³] | $V_K = A_{EZ} \cdot \left[ n_{ZK}(d_{Ely.} + d_{EL}) + d_{EL} \right]$ |
| 15 | Masse Aktivkörper [kg] | $m_K = \rho_K \cdot V_K$ |
| 16 | Kapazität des Kondensators [F] | $C_K = \dfrac{A_{EZ} \cdot c}{n_{ZK}}$ |

17    Energiedichte  Aktivkörper [Ws/m³]

$$w_{v,ab} = \frac{\frac{1}{2} c \cdot U_{EZ}^2}{\left(d_{Ely} + d_{El}\right)}$$

18    spez. Energie Aktivkörper [Ws/kg]

$$w_{m,ab} = \frac{\frac{1}{2} c \cdot U_{EZ}^2}{\left(\delta_{Ely} \cdot d_{Ely} + \delta_{El} \cdot d_{El}\right)}$$

| Bedeutung | Zeichen | Bedeutung | Zeichen |
|---|---|---|---|
| reale Oberfläche Grenzfläche Elektrode/Elektrolyt | $A_{Rea.}$ | geometrische Oberfläche | $A_{proj.}$ |
| Zellkapazität | $C_{Zelle}$ | Zellenzahl Kondensator | $n_{Z,Kon.}$ |
| Spannung einer Zelle | $U_Z$ | momentane Entladespannung | $U(t)$ |
| Spannungsniveau 2 des Kondensators | $U_2(t)$ | Spannungsniveau 1 des Kondensators | $U_1(t)$ |
| Innenwiderstand des Kondensators | Kon. | Lastwiderstand | $R_L$ |
| Zellwiderstand | $R_Z$ | Anschlußwiderstand | $R_{An.}$ |
| Masse des Kondensators | $m_K$ | Volumen des Kondensators | $V_{Kon.}$ |
| Effektivwert des Kondensatorstromes | $I_{eff}^2$ | Volumen Aktivkörper des Kondensators | $V_K$ |
| Dicke der Elektrolytschicht | $d_{Ely}$ | Dicke der Elektrode | $d_{El}$ |
| Masse Aktivkörper des Kondensators | $m_K$ | Dichte Aktivkörper des Kondensators | $\rho_K$ |
| Kapazität des Kondensators | $C_{Kon.}$ | Dichte der Elektrolytschicht | $\delta_{Ely}$ |
| Dichte der Elektrode | $\delta_{El}$ | | |

Tabelle 1: Auslegungsgleichungen Doppelschichtkondensator

**Bezugszeichenliste**

| | |
|---|---|
| 1 | Träger |
| 2 | Aktivschicht |
| 3 | Verbindungsschicht |
| 4 | bipolare Elektrode |
| 5 | Elektrolytschicht |
| 50 | Überdruckventil |
| 51 | Dichtung |
| 52 | Stromanschluß (Flansch) |
| 53 | Bördelgehäuse |
| 54 | Kondensatorstapel |
| 55 | Stromanschluß (Flansch) |
| 60 | isolierende Schicht |
| 61 | Büchse (Gehäuse) |
| 62 | Deckel |
| 70 | Druckpuffer |
| 71 | Rohr, z.B. aus Kunststoff |
| 80 | Vergußmasse |
| 81 | Gehäuse |
| 90 | Kondensatorstapel |
| 91,93 | Flansch |
| 92 | Zwischenschichten |

**Patentansprüche**

1. Doppelschichtkondensator aus mindestens zwei hintereinandergeschalteten Doppelschichtkondensatoreinzelzellen, wobei

   - abwechselnd bipolare Elektroden (**4**) und Elektrolytschichten (**5**) ohne zusätzliche Zwischenschichten angeordnet sind, und
   - eine bipolare Elektrode (**4**) eine elektrisch leitfähigen Träger (**1**) und eine beidseitig aufgebrachte Aktivschicht (**2**) mit geringem Widerstand und hoher aktiver Oberfläche umfaßt, und
   - der Träger (**1**) als elektrisch leitende Barriere zwischen den anliegenden ionenleitenden Elektrolytschichten wirkt, und die
   - Elektroden (**4**) und Elektrolytschichten (**5**) einen festen Verbund bilden, wobei ein elektrisch leitfähiger Binder in der Aktivschicht integriert ist oder eine separate Verbindungsschicht (**3**) zur Haftvermittlung von Aktivschicht und Elektrolytschicht vorhanden ist.

2. Doppelschichtkondensator nach Anspruch 1, **dadurch gekennzeichnet**, daß die Elektrolytschicht (**5**) ein Festelektrolyt wie z.B. eine Protonenaustauschmembran ist.

3. Doppelschichtkondensator nach Anspruch 1 oder 2, **dadurch gekennzeichnet**, daß die Elektrolytschicht (**5**) aus einer pastösen oder gelartigen Masse besteht.

4. Doppelschichtkondensator nach einem der vorangehenden Ansprüche, **dadurch gekennzeichnet**, daß der Träger (**1**) eine oder mehrere dichte oder poröse Schichten umfaßt.

5. Doppelschichtkondensator nach einem der vorangehenden Ansprüche, **dadurch gekennzeichnet**, daß der Träger (**1**) aus ebenen Metall- oder Kohlenstoff-Folien oder porösen Schichten wie Netzen, Geweben, Schäumen, Vliesen oder Papieren von Metall oder Kohlenstoff besteht.

6. Doppelschichtkondensator nach einem der vorangehenden Ansprüche, **dadurch gekennzeichnet**, daß sich in der Elektrolytschicht (**5**) ein gasdurchlässiger Abstandshalter wie z.B. ein Gewebe oder Vlies befindet.

7. Doppelschichtkondensator nach einem der vorangehenden Ansprüche, **dadurch gekennzeichnet**, daß die Aktivschicht (**2**) ein hydratisiertes, nicht vollständig oxidiertes Metalloxidpulver ist.

8. Doppelschichtkondensator nach einem der vorangehenden Ansprüche, **dadurch gekennzeichnet**, daß die Aktivschicht (2) auf den Träger mittels anorganischer oder organischer Binder wie Nafion®-Lösung aufgebracht wird, so daß ein fester Verbund von Trägerschicht (1) und Aktivschicht (2) entsteht.

9. Doppelschichtkondensator nach einem der vorangehenden Ansprüche, **dadurch gekennzeichnet**, daß die Aktivschicht (2) einen Füller wie Kohlepulver enthält.

10. Doppelschichtkondensator nach einem der vorangehenden Ansprüche, **dadurch gekennzeichnet**, daß er zwischen zwei Flanschplatten verpreßt ist.

11. Doppelschichtkondensator einem der vorangehenden Ansprüche, **dadurch gekennzeichnet**, daß der Verbund aus Elektroden (4) und Elektrolytschichten (5) in einem Gehäuse, z.B. in der Form einer Büchse (61) mit Deckel (62) oder eines Rohrs (71) integriert ist.

12. Doppelschichtkondensator einem der vorangehenden Ansprüche, **dadurch gekennzeichnet**, daß Flanschplatten (52,55) und Gehäuse (53) durch Bördeln verbunden sind.

13. Doppelschichtkondensator nach einem der vorangehenden Ansprüche, **dadurch gekennzeichnet**, daß der Verbund aus Elektroden (4) und Elektrolytschichten (5) in dem Gehäuse vergossen ist.

14. Doppelschichtkondensator nach einem der vorangehenden Ansprüche, **dadurch gekennzeichnet**, daß die Flansche oder/und das Gehäuse zur Erhöhung der Wärmeabfuhr und mechanischen Stabilität berippt ausgeführt sind.

15. Doppelschichtkondensator nach einem der vorangehenden Ansprüche, **dadurch gekennzeichnet**, daß die Flansche und/oder das Gehäuse aus leitfähigen Nichtmetallen wie Graphit bestehen.

16. Doppelschichtkondensator nach einem der vorangehenden Ansprüche, **dadurch gekennzeichnet**, daß die Flansche und/oder das Gehäuse zusätzlich als Korrosionsschutzschichten ausgeführt sind.

17. Doppelschichtkondensator nach einem der vorangehenden Ansprüche, **dadurch gekennzeichnet**, daß die Stromabführung und Stromzuführung mittels den Flanschen und/oder dem Gehäuse erfolgen kann.

18. Doppelschichtkondensator nach einem der vorangehenden Ansprüche, **dadurch gekennzeichnet**, daß das Gehäuse und/oder die Flansch eine Gasüberdrucksicherung, wie z.B. Überdruckventil (50) oder Berstscheibe (Sollbruchstelle), aufweisen.

19. Doppelschichtkondensator nach einem der vorangehenden Ansprüche, **dadurch gekennzeichnet**, daß der Verbund (90) aus Elektroden (4) und Elektrolytschichten (5) spiralförmig oder schleifenförmig oder mäanderförmig angeordnet ist.

20. Verwendung des Doppelschichtkondensators nach einem der vorangehenden Ansprüche als Energiespeicher, Stromquelle oder elektronisches Bauteil.

_Fig. 1_

Endplatte

Kathodenblech

Bipolare Elektrode

Matrix

Dichtung

End-Elektrode

Anodenblech

Endplatte

_Fig. 2_

Verbund bipolarer Elektroden 4
zu einem Stapel

Fig. 3

**Spannvorrichtung z.B. Flansch**

4

5

4

5

4

**Spannvorrichtung z.B. Flansch**

Stapel-
Kondensator

Fig 4

Fig. 5

Fig. 6

Fig. 7

Fig. 8

Fig.9

Energiedichte und spezifische Energie der DSK-Ausführungsformen (bezogen auf Aktivkörper)

Fig. 10

EP 0 820 078 A1

EP 0 820 078 A1

Europäisches Patentamt

# EUROPÄISCHER RECHERCHENBERICHT

Nummer der Anmeldung

EP 97 11 0888

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 5 136 474 A (SRINIVASAN SARANGAPANI ET AL.)<br>* Spalte 2, Zeile 38 - Spalte 3, Zeile 10 *<br>* Spalte 3, Zeile 41 - Spalte 5, Zeile 32 *<br>* Spalte 8, Zeile 35 - Zeile 36 *<br>* Spalte 9, Zeile 24 - Zeile 30 *<br>* Ansprüche 1,6 *<br>* Abbildungen 1,2,4 *<br>--- | 1-8, 10-20 | H01G9/155 |
| X | PROCEEDINGS OF THE INTERNATIONAL POWER SOURCES SYMPOSIUM, CHERRY HILL, NJ., JUNE 22 - 25, 1992,<br>Nr. SYMP. 35, 22.Juni 1992, INSTITUTE OF ELECTRICAL AND ELECTRONICS ENGINEERS,<br>Seiten 298-301, XP000342087<br>LACONTI A B ET AL: "PROTON EXCHANGE MEMBRANE ELECTROCHEMICAL CAPACITORS AND FUEL CELLS FOR PULSE POWER APPLICATIONS"<br>* Seite 298, Spalte 2, Absatz 2 - Seite 299, Spalte 2, Absatz 2 *<br>* Seite 301, Spalte 1, Absatz 2 *<br>* Abbildung 5 *<br>--- | 1-8, 10-20 | |
| X | PROCEEDINGS OF THE INTERNATIONAL POWER SOURCES SYMPOSIUM, CHERRY HILL, JUNE 25 - 28, 1990,<br>Nr. SYMP. 34, 25.Juni 1990, INSTITUTE OF ELECTRICAL AND ELECTRONICS ENGINEERS,<br>Seiten 346-350, XP000222387<br>OXLEY J E: "HIGH-RATE, SOLID-STATE ELECTROCHEMICAL CAPACITORS"<br>* das ganze Dokument *<br>---<br>-/-- | 1-5,7,8 | **RECHERCHIERTE SACHGEBIETE (Int.Cl.6)**<br><br>H01G |

Der vorliegende Recherchenbericht wurde für alle Patentansprüche erstellt

| Recherchenort | Abschlußdatum der Recherche | Prüfer |
|---|---|---|
| DEN HAAG | 14.August 1997 | Goossens, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.......................................................................

& : Mitglied der gleichen Patentfamilie, übereinstimmendes Dokument

EPO FORM 1503 03.82 (P04C03)

22

EP 0 820 078 A1

Europäisches
Patentamt

**EUROPÄISCHER RECHERCHENBERICHT**

Nummer der Anmeldung

EP 97 11 0888

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EXTENDED ABSTRACTS, Bd. 94/2, 1.Januar 1992, Seite 798 XP000550884 JOW T R ET AL: "HYDROUS RUTHENIUM OXIDE AS AN ELECTRODE MATERIAL FOR ELECTROCHEMICAL CAPACITORS" * das ganze Dokument * --- | 7 | |
| A | PATENT ABSTRACTS OF JAPAN vol. 016, no. 459 (E-1268), 24.September 1992 & JP 04 162412 A (NEC CORP), 5.Juni 1992, * Zusammenfassung * --- | 11-13 | |
| A | PATENT ABSTRACTS OF JAPAN vol. 018, no. 372 (E-1577), 13.Juli 1994 & JP 06 104143 A (NIPPON CHEMICON CORP), 15.April 1994, * Zusammenfassung * --- | 14 | |
| A | PATENT ABSTRACTS OF JAPAN vol. 017, no. 057 (E-1315), 4.Februar 1993 & JP 04 266004 A (KOBE STEEL LTD;OTHERS: 01), 22.September 1992, * Zusammenfassung * --- | 16 | RECHERCHIERTE SACHGEBIETE (Int.Cl.6) |
| A | PATENT ABSTRACTS OF JAPAN vol. 096, no. 006, 28.Juni 1996 & JP 08 045796 A (MARCON ELECTRON CO LTD), 16.Februar 1996, * Zusammenfassung * --- | 18 | |
| A | US 5 219 673 A (THOMAS D. KAUN) * Spalte 5, Zeile 4 - Zeile 25 * * Abbildung 2 * ----- | 19 | |

Der vorliegende Recherchenbericht wurde für alle Patentansprüche erstellt

| Recherchenort | Abschlußdatum der Recherche | Prüfer |
|---|---|---|
| DEN HAAG | 14.August 1997 | Goossens, A |